# DEMANDE DE BREVET EUROPEEN

(11) **EP 1 199 798 A2**
(43) Date de publication de la demande: **24.04.2002**
(21) Numéro de dépôt: 01410126.5
(22) Date de dépôt: 05.10.2001
(51) Int. Cl.: H03F 3/45, H02M 3/156

(54) **Amplificateur d'erreur intégré**

(30) Priorité: 06.10.2000 FR 0012809
(71) Demandeur: STMicroelectronics S.A., 92120 Montrouge (FR)
(72) Inventeur: Bailly, Alain, 13790 Rousset (FR); Esteve, Lionel, 13790 Rousset (FR)
(74) Mandataire: de Beaumont, Michel

(57) **Abrégé**

L'invention concerne un amplificateur d'erreur fournissant un signal d'erreur analogique, comportant un amplificateur opérationnel (1') dont une borne de sortie commande une charge active (10) de décharge d'un réseau résistif et capacitif (R4, C4) alimenté par une source (12) de courant de référence (I_{ref}), et des moyens (R5, R6) pour recopier le courant de référence dans une résistance d'entrée (R) dont une borne (6') reçoit un signal de mesure et dont l'autre borne (4') est connectée à une entrée non-inverseuse de l'amplificateur opérationnel, le signal d'erreur étant disponible aux bornes du réseau résistif et capacitif.

## Description

La présente invention concerne le domaine des systèmes électroniques régulés et, plus particulièrement, les circuits intégrés comprenant un amplificateur d'erreur en entrée d'un système de régulation.

Un exemple d'application de la présente invention est la régulation d'une tension d'alimentation, par exemple, dans un convertisseur de tension de type alimentation à découpage. Dans un tel convertisseur, on utilise un amplificateur d'erreur en entrée d'un circuit de commande d'un interrupteur commandé en modulation de largeur d'impulsions. Cet amplificateur compare une tension proportionnelle à la tension fournie par le convertisseur à une tension de référence, et fournit un signal analogique proportionnel à la différence entre les deux tensions. Plus généralement, la présente invention s'applique à toute régulation électronique ayant recours à un amplificateur différentiel d'un signal électrique représentant une image du signal régulé par rapport à une référence interne.

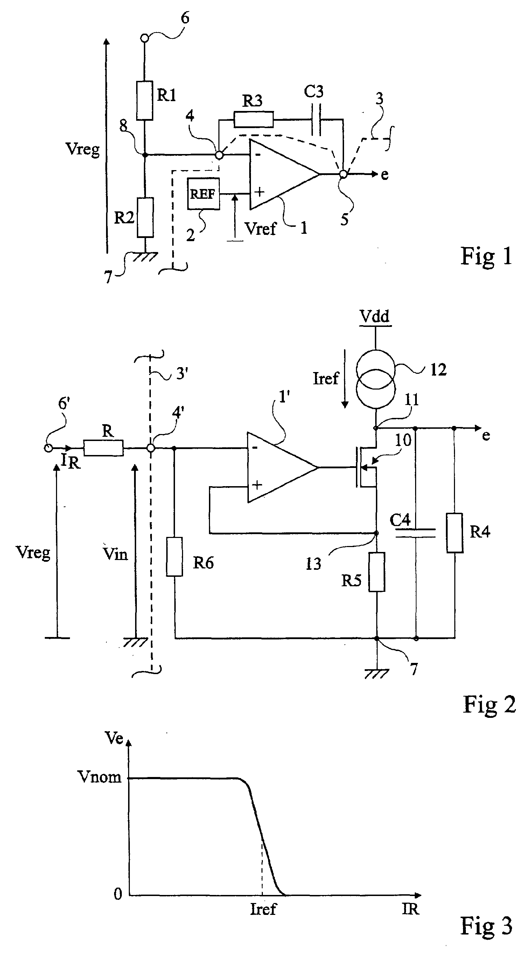

La figure 1 représente un exemple classique d'amplificateur d'erreur en circuit intégré. Un tel amplificateur utilise un amplificateur opérationnel 1 dont une sortie fournit un signal d'erreur e. En entrée, l'amplificateur 1 reçoit une tension de référence V_{ref} qui est comparée à une tension appliquée sur son autre entrée. La tension V_{ref} est fournie par un circuit 2 de référence de tension (REF) dont la sortie est reliée à l'entrée non-inverseuse de l'amplificateur 1. Le circuit 2 est généralement intégré avec l'amplificateur 1 dans un même circuit. En figure 1, on a illustré schématiquement la limite du circuit intégré par un pointillé 3. D'autres composants sont bien entendu intégrés avec l'amplificateur 1. Toutefois, celui-ci a besoin de deux bornes 4 et 5 de connexion externe au circuit intégré 3. La borne 5 représente la sortie de l'amplificateur 1. La borne 4 représente l'entrée non-inverseuse de l'amplificateur 1. Une tension V_{reg}, fonction de la grandeur régulée, est appliquée aux bornes 6 et 7 d'un pont diviseur constitué d'une résistance R1 et d'une résistance R2 en série, la borne 7 représentant la masse. Le point milieu 8 de cette association en série est relié à la borne 4. Le pont diviseur résistif est nécessaire dans la mesure où la référence de tension de l'amplificateur 1 est intégrée. L'adaptation du coefficient de proportionnalité entre la tension de référence V_{ref} et la tension à réguler V_{reg} s'effectue par le choix des résistances R1 et R2. La relation reliant la tension régulée à la tension de référence est : V_{reg} = (1 + R1/R2) V_{ref}.

La boucle de contre réaction de l'amplificateur 1 est constituée d'une résistance R3 en série avec un condensateur C3. La résistance R3 et le condensateur C3 de la boucle sont généralement externes au circuit 1.

Un amplificateur d'erreur tel qu'illustré par la figure 1 a une fonction de transfert de type proportionnel-intégral. Le coefficient de proportionnalité de la fonction de transfert est donné par le rapport entre les résistances R1 et R3. La constante d'intégration est donnée par le produit du condensateur C3 par la résistance R1.

Un amplificateur d'erreur tel qu'illustré dans la figure 1 se retrouve, par exemple, dans un circuit intégré commercialisé par la Société STMicroelectronics sous la dénomination UC3842. La sortie (non représentée) de ce circuit intégré fournit un train d'impulsions à un interrupteur pour former un convertisseur à découpage. La tension V_{reg} correspond alors à la tension fournie par le convertisseur.

Un inconvénient des amplificateurs d'erreur classiques est que la réalisation d'une source 2 de tension de référence intégrée nécessite des réglages et ajustements particuliers lors de la fabrication du circuit intégré. Cet ajustement de la tension de référence V_{ref} s'effectue le plus souvent par un réseau résistif à fusibles. La source de tension de référence est généralement obtenue à partir d'une source de courant de référence utilisée par ailleurs dans le circuit intégré pour polariser les autres étages. Cette source de courant est elle-même ajustée, par exemple, par un réseau résistif à fusibles. Le recours à deux grandeurs de référence rend le circuit complexe et accroît le coût du test du circuit.

Un autre inconvénient de l'amplificateur d'erreur de la figure 1 est que les résistances R3 et C3 ne peuvent pas être intégrées. Cela est dû aux valeurs élevées de ces composants, pour des raisons de stabilité de la boucle de régulation dans laquelle est placé l'amplificateur 1. Le condensateur C3 présente une valeur (typiquement, plusieurs dizaines de nanofarads) nettement supérieure à quelques dizaines de picofarads que l'on considère généralement comme une limite d'intégration.

Un autre inconvénient est que deux bornes 4 et 5 d'accès au circuit intégré 3 sont nécessaires pour la mise en oeuvre de l'amplificateur d'erreur.

La présente invention vise à pallier au moins un des inconvénients d'un amplificateur d'erreur connu.

L'invention vise plus particulièrement à proposer un nouvel amplificateur d'erreur qui s'affranchisse du besoin d'une tension de référence.

L'invention vise également à proposer une solution qui minimise le nombre de composants externes d'un circuit intégrant l'amplificateur d'erreur.

L'invention vise en outre à minimiser le nombre de bornes du circuit intégré nécessaires.

Pour atteindre ces objets, la présente invention prévoit un amplificateur d'erreur fournissant un signal d'erreur analogique, comportant un amplificateur opérationnel dont une borne de sortie commande une charge active de décharge d'un réseau résistif et capacitif alimenté par une source de courant de référence, et des moyens pour recopier le courant de référence dans une résistance d'entrée dont une borne reçoit un signal de mesure et dont l'autre borne est connectée à une entrée non-inverseuse de l'amplificateur opérationnel, le signal d'erreur étant disponible aux bornes du réseau résistif et capacitif.

Selon un mode de réalisation de la présente invention, la fonction de transfert est réglée par les valeurs du réseau résistif et capacitif.

Selon un mode de réalisation de la présente invention, les bornes inverseuse et non-inverseuse de l'amplificateur opérationnel sont chacune connectées, par une résistance, à un potentiel de référence.

Selon un mode de réalisation de la présente invention, une première borne de puissance de la charge active est reliée, par la source de courant de référence, à la tension d'alimentation du circuit intégré et constitue une borne de sortie fournissant le signal d'erreur.

Selon un mode de réalisation de la présente invention, l'entrée inverseuse de l'amplificateur opérationnel est reliée à une deuxième borne de puissance de la charge active.

Selon un mode de réalisation de la présente invention, ledit réseau est constitué d'une résistance en parallèle avec un condensateur, connectés entre la première borne de puissance de la charge active et le potentiel de référence.

Selon un mode de réalisation de la présente invention, l'amplificateur d'erreur est réalisé sous forme de circuit intégré, toutes les résistances et condensateurs le constituant étant intégrés à l'exception de la résistance d'entrée.

Ces objets, caractéristiques et avantages, ainsi que d'autres de la présente invention seront exposés en détail dans la description suivante de modes de réalisation particuliers faite à titre non-limitatif en relation avec les figures jointes parmi lesquelles :
la figure 1 décrite précédemment représente un exemple classique d'amplificateur d'erreur ;
la figure 2 représente un mode de réalisation d'un amplificateur d'erreur selon la présente invention ; et
la figure 3 illustre la fonction de transfert d'un amplificateur d'erreur selon l'invention.

Les mêmes éléments ont été désignés par les mêmes références aux différentes figures. Pour des raisons de clarté, seuls les constituants d'un circuit intégrant un amplificateur d'erreur de l'invention ont été représentés aux figures et seront décrits par la suite. En particulier, les circuits auxquels est destiné le signal d'erreur généré par l'amplificateur sont classiques et ne font pas l'objet de l'invention.

Une caractéristique de la présente invention est de prévoir un amplificateur d'erreur dans lequel on compare des courants et non plus des tensions.

La figure 2 représente un mode de réalisation d'un amplificateur d'erreur selon l'invention. Comme dans la représentation de la figure 1, la limite d'un circuit intégrant l'amplificateur d'erreur de l'invention a été matérialisée sous la forme d'un pointillé 3'.

Un amplificateur d'erreur selon l'invention comporte un amplificateur opérationnel 1' dont l'entrée non-inverseuse est directement reliée à une borne 4' du circuit intégré 3' destinée à recevoir un signal de mesure. Dans l'exemple d'une régulation d'une tension V_{reg}, cette tension V_{reg} est appliquée sur une première borne 6' d'une résistance R dont l'autre borne est connectée à la borne 4'. La sortie de l'amplificateur 1' est reliée à la borne de commande d'une charge active 10 (par exemple, un transistor MOS). Une première borne de puissance 11 de la charge active 10 constitue le point de comparaison et est reliée, par une source de courant 12 de référence (I_{ref}), à la tension d'alimentation V_{dd} du circuit intégré. La borne 11 constitue également la sortie de l'amplificateur d'erreur fournissant le signal e. La deuxième borne 13 de puissance de la charge active 10 est reliée directement à l'entrée inverseuse de l'amplificateur 1'. La borne 11 est reliée à la masse 7 par un circuit résistif et capacitif parallèle constitué, par exemple, d'une résistance R4 en parallèle avec un condensateur C4. La borne 13 est reliée à la masse par une résistance R5. La borne 4' (donc l'entrée non-inverseuse de l'amplificateur 1') est également reliée à la masse 7 par une résistance R6.

Le fonctionnement d'un amplificateur d'erreur selon l'invention est le suivant. L'amplificateur 1' asservit une recopie du courant de référence I_{ref} sur le courant dans la résistance d'entrée externe R. Cette recopie du courant est obtenue grâce aux résistances R5 et R6. De préférence, la résistance R5 sera supérieure à la résistance R6 (par exemple, dans un rapport compris entre 10 et 100). On minimise ainsi le courant dans le réseau R4-C4. Le courant de référence I_{ref}, fourni par la source 12, circule dans le réseau résistif et capacitif R4-C4 de sortie. Quand le courant dans la résistance R (donc également dans la résistance R6 en raison de l'impédance d'entrée élevée de l'amplificateur 1') est inférieur au courant de référence, le transistor 10 conduit moins de courant que la source 12. Le surplus de courant de référence alimente le réseau R4-C4. La tension de sortie Vₑ représentant le signal d'erreur a alors tendance à augmenter. Quand le courant dans la résistance R est supérieur au courant de référence, la conduction du transistor 10 entraîne une décharge du condensateur C4 dans la résistance R5. Il en découle une chute de la tension de sortie Vₑ. Ce qui précède ne tient compte que du fonctionnement en régime établi du signal d'erreur sur une valeur moyenne.

La relation qui lie la tension V_{reg} au courant de référence Iref est : V_{reg} = R.I_{ref} + Vᵢₙ, où Vᵢₙ représente la tension aux bornes de la résistance R6. La résistance R6 est, de préférence, faible pour minimiser l'influence de la tension Vᵢₙ sur la tension V_{reg} que l'on souhaite réguler.

La résistance R4 et le condensateur C4 sont dimensionnés en fonction du coefficient d'intégration de la fonction de transfert souhaitée.

La figure 3 illustre la fonction de transfert de l'amplificateur de la figure 2. La figure 3 représente un exemple d'allure de la tension Ve en fonction du courant I_{R} dans la résistance R. On remarque que la variation de la tension d'erreur Vₑ est concentrée au voisinage du courant de référence I_{ref} fourni par la source 12. On a illustré une tension nominale Vₙₒₘ indiquant la tension de saturation à l'état haut de l'amplificateur d'erreur. Quand le courant I_{R} s'écarte du courant I_{ref}, la tension Vₑ s'annule ou devient égale à la tension Vₙₒₘ selon le sens de variation du courant. La forte pente de la variation autour du courant I_{ref} est fonction du gain statique de l'amplificateur d'erreur dans son ensemble, qui est généralement élevé.

L'amplificateur d'erreur de l'invention respecte la fourniture d'une tension d'erreur (Vₑ) en sortie et le recours à une tension de mesure (V_{reg}) en entrée. Ainsi, la mise en oeuvre de l'invention est parfaitement compatible avec les circuits existants utilisant un amplificateur d'erreur pour la régulation.

Un avantage de la présente invention est que le recours à une comparaison en courant évite d'utiliser une source de tension de référence. Or, dans les circuits intégrés, on dispose toujours d'une source de courant de référence qui sert, par recopie de courant au moyen de montages en miroir, à alimenter les différents étages. Par conséquent, la source de courant 12 de l'amplificateur de l'invention est déjà disponible dans tout circuit intégré. On réduit ainsi le nombre de composants nécessaires.

Un autre avantage de l'invention est qu'elle minimise le nombre de composants externes au circuit intégré. En effet, en ayant recours à une comparaison par recopie de courant, les valeurs mises en jeu (quelques microampères) rendent les composants R5, R6, R4 et C4 compatibles avec une intégration. Par exemple, la résistance R6 est de l'ordre de quelques centaines d'ohms. La résistance R5 est alors de l'ordre de quelques kiloohms. Le condensateur C4 est, par exemple, de l'ordre de la dizaine de picofarads. La résistance R4 est alors, pour une fréquence de coupure de quelques kilohertz, de l'ordre de quelques megohms. Pour l'intégration, cette dernière est réalisée, de préférence, par un élément actif (transistor MOS à appauvrissement).

Un autre avantage de l'invention est qu'une seule borne (4') est désormais nécessaire pour l'accès à l'amplificateur d'erreur.

Bien entendu, la présente invention est susceptible de diverses variantes et modifications qui apparaîtront à l'homme de l'art. En particulier, les valeurs à donner aux résistances et condensateur dépendent de l'application et pourront être adaptées à partir des indications fonctionnelles données ci-dessus.

## Revendications

1. Amplificateur d'erreur fournissant un signal d'erreur analogique, **caractérisé en ce qu'**il comporte un amplificateur opérationnel (1') dont une borne de sortie commande une charge active (10) de décharge d'un réseau résistif et capacitif (R4, C4) alimenté par une source (12) de courant de référence (I_{ref}), et des moyens (R5, R6) pour recopier le courant de référence dans une résistance d'entrée (R) dont une borne (6') reçoit un signal de mesure (V_{reg}) et dont l'autre borne (4') est connectée à une entrée non-inverseuse de l'amplificateur opérationnel, le signal d'erreur (Vₑ) étant disponible aux bornes du réseau résistif et capacitif.

2. Amplificateur d'erreur selon la revendication 1, **caractérisé en ce que** la fonction de transfert est réglée par les valeurs du réseau résistif et capacitif (R4, C4).

3. Amplificateur d'erreur selon la revendication 1 ou 2, **caractérisé en ce que** les bornes inverseuse et non-inverseuse de l'amplificateur opérationnel (1') sont chacune connectées, par une résistance (R6, R5), à un potentiel de référence (7).

4. Amplificateur d'erreur selon l'une quelconque des revendications 1 à 3, **caractérisé en ce qu'**une première borne de puissance (11) de la charge active (10) est reliée, par la source de courant de référence (12), à la tension d'alimentation (V_{dd}) du circuit intégré et constitue une borne de sortie fournissant le signal d'erreur (Vₑ).

5. Amplificateur d'erreur selon la revendication 4, **caractérisé en ce que** l'entrée inverseuse de l'amplificateur opérationnel (1') est reliée à une deuxième borne de puissance (13) de la charge active (10).

6. Amplificateur d'erreur selon la revendication 4 ou 5, **caractérisé en ce que** ledit réseau est constitué d'une résistance (R4) en parallèle avec un condensateur (C4), connectés entre la première borne de puissance (11) de la charge active (10) et le potentiel de référence (7).

7. Amplificateur d'erreur selon l'une quelconque des revendications 1 à 6, **caractérisé en ce qu'**il est réalisé sous forme de circuit intégré, toutes les résistances et condensateurs le constituant étant intégrés à l'exception de la résistance d'entrée (R).
